# EUROPEAN PATENT APPLICATION

(11) **EP 1 791 377 A1**
(43) Date of publication of application: **30.05.2007**
(21) Application number: 05292489.1
(22) Date of filing: 23.11.2005
(51) Int. Cl.: H04Q 7/30

(54) **Method for managing at least an area covered by a base station**

(71) Applicant: Mitsubishi Electric Information Technology Centre Europe B.V., 1119 NS Schiphol Rijk (NL); MITSUBISHI DENKI KABUSHIKI KAISHA, Chiyoda-ku Tokyo 100-8310 (JP)
(72) Inventor: Hara, Yoshitaka, c/o Mitsubishi Electric ITE, 35708 Rennes Cedex 7 (FR)
(74) Representative: Maillet, Alain

(57) **Abstract**

The present invention concerns a base station of a wireless telecommunication network, the base station comprising at least a first antenna which radiates signals in a first frequency band into a first area. The base station comprises plural second antennas which radiate signals in a second frequency band higher than the first frequency band and means for directing the signals radiated in the second frequency band by the plural second antennas into different second areas and in that the total area covered by the second areas is sensibly equal to the first area. The invention concerns also a terminal and the corresponding methods.

## Description

The present invention relates generally to a multi-bands wireless telecommunication network and in particular, to a base station and a method for managing the area covered by a base station of the wireless telecommunication network.

Recently, much interest has been devoted to the fourth generation wireless telecommunication networks in order to provide high data rate services to wireless terminals according to the rapid growth of terminals and high data rates applications such as picture or video transfers.

In order to enable high data rate services, the frequency band planed to be used in the fourth generation wireless telecommunication networks is much higher than the one currently being used by the classical wireless telecommunication networks. The area covered by a base station is dependant of the radio wave propagations characteristics, which depend on the operating frequency band.

In general, low frequency bands have smaller propagation loss than high frequency bands. The propagation loss is proportional to the square of the operating frequency used. Therefore, a base station which transfers signals on a high frequency band has coverage area which is smaller as a base station which transfers signals on a low frequency band.

A coverage area is an area wherein terminals located in that area can receive the signals radiated by the base station. A terminal located in an area is a terminal which receives signals from the base station which transfers message into the area.

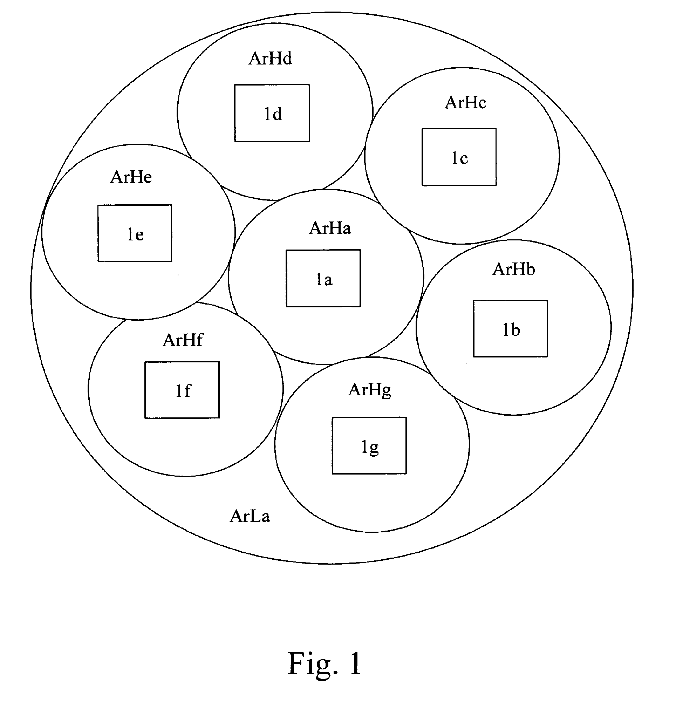

Considering that, in order to provide the same coverage area for a high frequency band wireless telecommunication network and a low frequency band wireless telecommunication network, it is then necessary to increase the number of base stations as it is shown in the Fig. 1.

The Fig. 1 shows an example of a repartition of base stations if the total coverage area for the high frequency band has to be the same as the coverage area of the low frequency band.

In the example of the Fig. 1, a base station 1a radiates signals in a low frequency band into a first area noted ArLa and radiates signals in a high frequency band into a second area noted ArHa. The base station 1a is a multi-band base station. The second area ArHa is much smaller than the first area ArLa.

In order to provide to terminals the same covering area as the one provided with low frequency band, it is necessary to set plural base stations 1b to 1g which radiate signals in the high frequency band in the respective areas ArHb to ArHg.

Such configuration, as proposed by Yoshitaka Hara and all in the VTC2005 Fall conference held in Dallas on 25-28 September 2005 and entitled " A Multiband Mobile Communication System for Wide Coverage and High Data Rate", is not satisfactory because many base stations need to be installed when high frequency band is used. Such important number of base stations increases the cost of the deployment of such wireless telecommunication network.

The aim of the invention is therefore to propose a method, and a base station which allow the deployment of a wireless telecommunication network wherein signals are radiated in a first and second frequency bands without any installation of additional base stations.

To that end, the present invention concerns a base station of a wireless telecommunication network, the base station comprising at least a first antenna which radiates signals in a first frequency band into a first area, the base station comprises plural second antennas which radiate signals in a second frequency band higher than the first frequency band and means for directing the signals radiated in the second frequency band by the plural second antennas into different second areas and the total area covered by the second areas is sensibly equal to the first area.

The present invention concerns also a method for managing at least an area covered by a base station of a wireless telecommunication network, the base station comprising at least a first antenna which radiates signals in a first frequency band into a first area, characterised in that the method comprises the step, executed by the base station of, directing the signals radiated by plural second antennas of the base station in a second frequency into different second areas, the second frequency band being higher than the first frequency band, wherein the total area covered by the second areas is sensibly equal to the first area.

Thus, by directing the signals radiated by the plural second antennas in a given direction, it is possible to increase the distance for which the radiated signals can be received.

By directing the signals radiated by the plural second antennas in plural directions it is possible to increase the coverage of the total area covered by the second areas.

By having a base station which radiates signals in a first and second frequency band, it is possible to enable the terminals working in the first and/or the second frequency band to access to a wireless telecommunication network.

By increasing the total area covered by the second areas, it is possible to provide a wireless telecommunication network wherein signals are radiated in the second frequency bands without any installation of additional base stations.

According to a particular feature, the base station comprises at least two first antennas, each of the at least two first antennas being one of the second antennas and in that the first antennas are spaced by a distance which is larger than the distance spacing two second antennas.

Thus, the coupling between the first antennas is reduced, the interferences between the first antennas is reduced.

According to a particular feature, the first antenna radiates signals in the first frequency band into different first areas and the base station transfers, through at least a part of the signals radiated in the first frequency band in each first area, information identifying the first area from the other first areas.

Thus, it is possible, for a terminal which receives such signals to identify a first area using such information.

According to a particular feature, the base station transfers, through at least a part of the signals radiated in the second frequency band, in each second area, information identifying the second area from the other second areas which are comprised in the same first area as the second area.

Thus, it is possible for a terminal which receives such signals to identify a second area using such information.

According to a particular feature, the base station receives, from a terminal of the wireless telecommunication network, through the antennas, signals comprising information identifying a first area wherein the terminal is located, receives from the terminal, through the antennas, signals comprising information representative of the second area wherein the terminal is located and determines in which second area the terminal is according to the received information.

Thus, it is possible to allocate the same information identifying a second area to different second areas if they belong to different first areas. The number of information identifying the second areas is then reduced.

According to a particular feature, the base station receives signals representative of the quality of the signals received by the terminal in the first and second frequency bands.

According to a particular feature, the base station detects a request for a communication with a terminal issued from a telecommunication network, transfers a message through the first frequency band, receives signals in the second frequency band in response to the transferred message, determines the second area in which the terminal is located according to the received signals in the second frequency band.

Thus, the base station can easily locate the terminal. Using the first frequency band, the base station transfers the message in a wide first area. By receiving a response message in the second frequency band, the base station can determine precisely the location of the terminal.

According to another aspect, the present invention concerns a terminal of a wireless telecommunication network, the terminal comprising means for receiving signals from a base station wireless telecommunication network in a first frequency band, the signals comprising information identifying a first area in which the signals are radiated by the base station in the first frequency band, means for determining the quality of the received signals, and means for transferring signals to the base station signals comprising information identifying a first area wherein the terminal is located,
characterised in that the terminal further comprises :
- means for receiving signals from a base station wireless telecommunication network in a second frequency band, the signals comprising information identifying a second area in which the signals are radiated by the base station in the second frequency band,
- means for determining the quality of the received signals,
- means for transferring signals to the base station signals comprising information identifying a first area wherein the terminal is located, and the quality of the signals received by the terminal.

The present invention concerns also a method for reporting information by a terminal of a wireless telecommunication network, the method comprises the steps, executed by the terminal, of :
- receiving signals from a base station wireless telecommunication network in a first frequency band, the signals comprising information identifying a first area in which the signals are radiated by the base station in the first frequency band,
- determining the quality of the received signals,
- transferring to the base station signals comprising information identifying a first area wherein the terminal is located,
characterised in that the method further comprises the steps of :
- receiving signals from a base station wireless telecommunication network in a second frequency band, the signals comprising information identifying a second area in which the signals are radiated by the base station in the second frequency band,
- determining the quality of the received signals,
- transferring to the base station signals comprising information identifying a first area wherein the terminal is located.

Thus, the terminal can give to the base station information which allow the base station to locate it.

According to still another aspect, the terminal transfers signals representative of the quality of the signals received by the terminal in the first and second frequency bands.

According to still another aspect, the terminal comprises a number of antennas used for the reception and/or the transfer of the signals in the second frequency band which is larger than the number of antennas used for the reception and/or the transfer of the signals in the first frequency band.

Thus the terminal, using the antennas used for the reception and/or the transfer of the signals in the second frequency band can perform beamforming on the received and/or transferred signals in the second frequency band.

According to still another aspect, the terminal comprises means for receiving a message through the first frequency band, the message being representative of a communication which is intended to be established with the terminal and means for transferring signals in the second frequency band in response to the received message.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computers programs are the same as those set out above related to the method and base station according to the invention, they will not be repeated here.

The characteristics of the invention will emerge more clearly from a reading of the following description of an example embodiment, the said description being produced with reference to the accompanying drawings, among which :
Fig. 1 shows an example of a repartition of base stations if the coverage area for a high frequency band wireless telecommunication network is the same as the coverage area for a low frequency band wireless telecommunication network ;
Fig. 2 shows an example of the areas covered by the signals radiated in the first and second frequency bands by the antennas of a base station according to the invention ;
Fig. 3 is a diagram representing the architecture of a base station according to the present invention ;
Fig. 4 is a diagram representing the architecture of a terminal according to the present invention ;
Fig. 5 is an example of the antenna array of a base station ;
Figs. 6a and 6b show parts of a first algorithm executed by a terminal according to the invention ;
Fig. 7 is a first algorithm executed by a base station according to the present invention ;
Fig. 8 is a second algorithm executed by a base station according to the invention ;
Fig. 9 is a second algorithm executed by a terminal according to the present invention.

**Fig. 1** shows an example of a repartition of base stations if the coverage area for a high frequency band wireless telecommunication network is the same as the coverage area for a low frequency band wireless telecommunication network.

The Fig. 1 discloses a repartition, as proposed in the prior art, of base stations if the coverage area for a high frequency band wireless telecommunication network is the same as the coverage area for a low frequency band wireless telecommunication network.

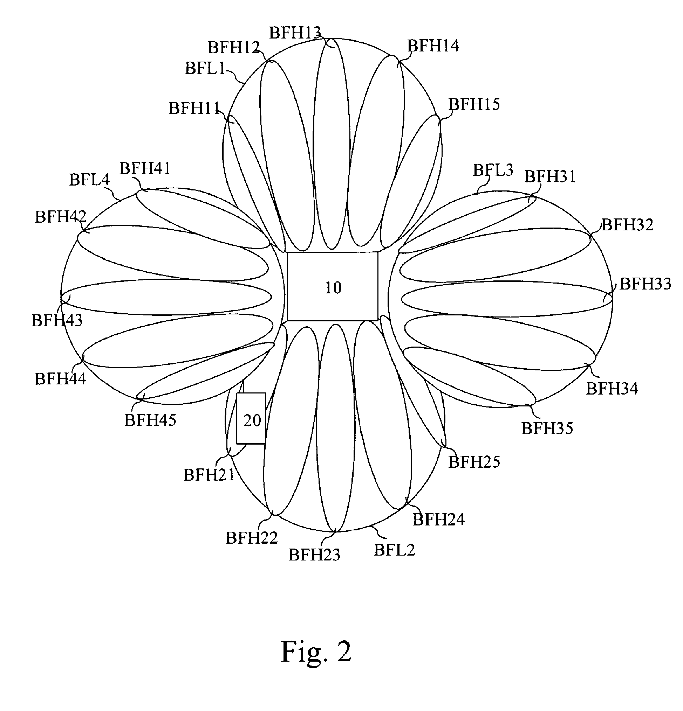

**Fig. 2** shows an example of the areas covered by the signals radiated in the first and second frequency bands by the antennas of a base station according to the invention.

The base station 10 of the wireless telecommunication network, comprises as example, four first antennas not shown in the Fig. 2 which radiate signals in a first frequency band into four first areas noted BFL1, BFL2, BFL3 and BFL4.

It has to be noted here that, in a variant of realisation, the base station 10 radiates signals into a more important number of first areas using a more important number of first antennas or according to another variant, the base station 10 radiates signals into a single first area using a single first antenna.

The first frequency band is as example, and in a non limitative way, a frequency band around a frequency of 900 MHz.

The base station 10 comprises plural second antennas not shown in the Fig. 2 which radiate signals in a second frequency band into plural second areas noted BFH11, BFH12, BFH13, BFH14, BFH15, BFH21, BFH22, BFH23, BFH24 , BFH25, BFH31, BFH32, BFH33, BFH34, BFH35, BFH41, BFH42, BFH43, BFH44, and BFH45.

The second frequency band is as example and in a non limitative way, a frequency band around a frequency of 3.5 GHz.

The first and second frequency bands are then separated.

The base station 10 comprises means for directing the signals radiated in the second frequency band by the N plural second antennas into different second areas BFH11 to BFH15, BFH21 to BFH25, BFH31 to BFH35 and BFH41 to BFH45.

As it is shown in the Fig. 2, the total area covered by the second areas BFH11, BFH 12, BFH 13, BFH 14 and BFH 15 is sensibly equal to the first area BFL 1, the total area covered by the second areas BFH21, BFH22, BFH23, BFH24 and BFH25 is sensibly equal to the first area BFL2, the total area covered by the second areas BFH31, BFH32, BFH33, BFH34 and BFH35 is sensibly equal to the first area BFL3 and the total area covered by the second areas BFH41, BFH42, BFH43, BFH44 and BFH45 is sensibly equal to the first area BFL4.

It has to be noted here that, the total area covered by plural second areas is sensibly equal to a first area when the total area covered by plural second areas is at least equal to 60 percents of the first area. Preferably the total area covered by plural second areas is at least equal to 90 percents of the first area.

Preferably, the base station 10 allocates to each second area which covers a given first area, different information identifying the second areas.

The base station 10 reuses the information identifying a second area to another second area if the second areas cover partially different first areas.

As example, the second areas BFH11, BFH21, BFH31 and BFH41 have the same information identifying a second area which are different from the information identifying the second areas BFH12, BFH22, BFH32 and BFH42.

For the sake of simplicity, only one terminal 20 is shown in the Fig. 2, but we can understand that much more terminals 20 are located in the first or second areas covered by the base station 10. The terminal 20 is, as example and in a non limitative way, a mobile phone or personal computer or a personal digital assistant.

The terminal 20 is able to receive or establish some communication through the base station 10 of the wireless telecommunication network by transferring and/or receiving signals in the first frequency band and/or the second frequency band.

The communication are established of received with other terminals 20 of the wireless telecommunication network composed of plural base stations 10 according to the invention or the communication are established or received with other telecommunication devices through a wired communication network like a telephone network or an Internet network or through a combination of above cited networks.

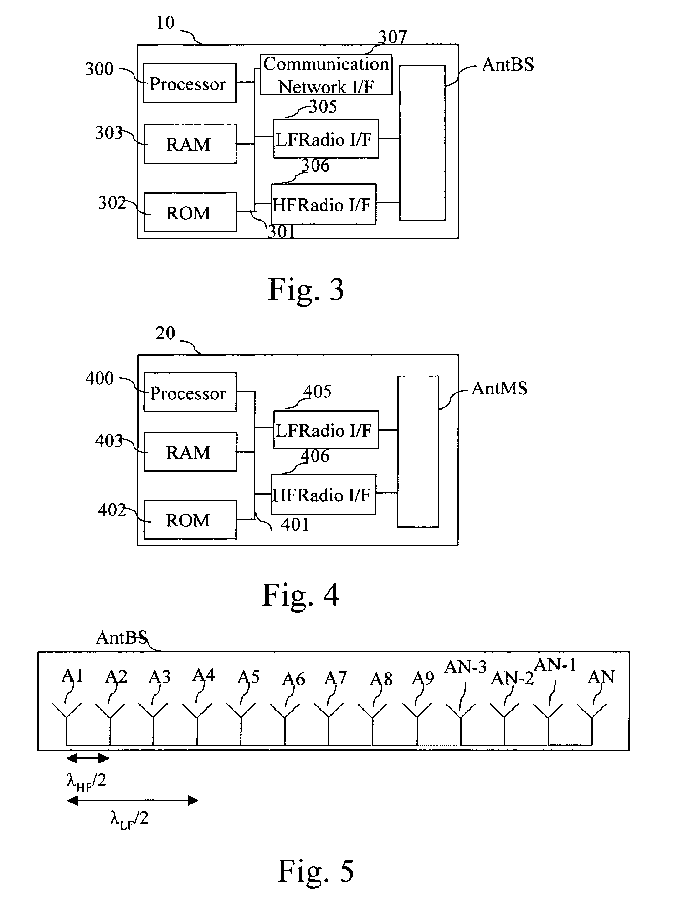

**Fig. 3** is a diagram representing the architecture of a base station according to the present invention.

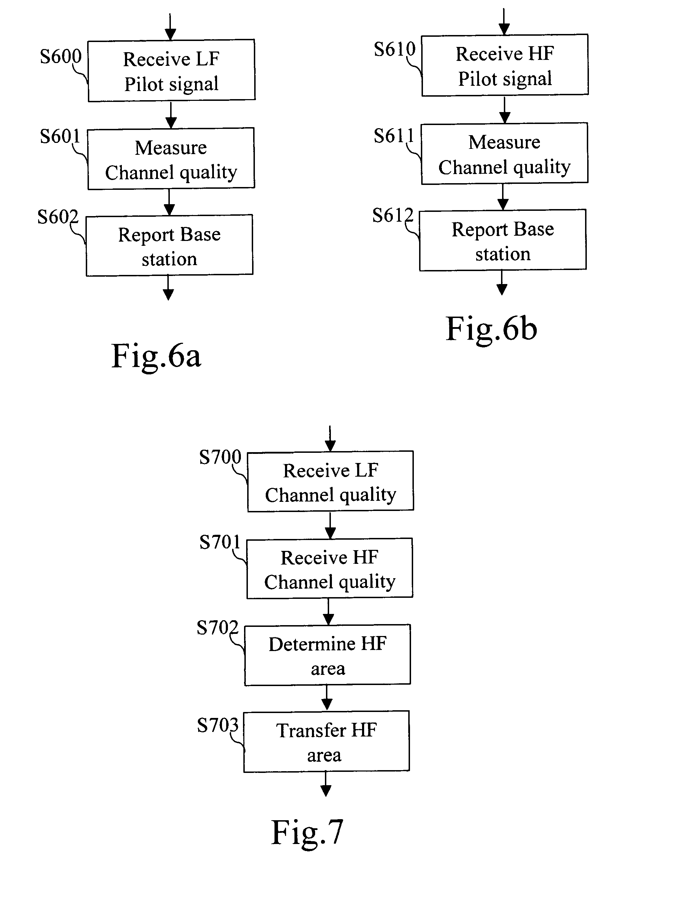

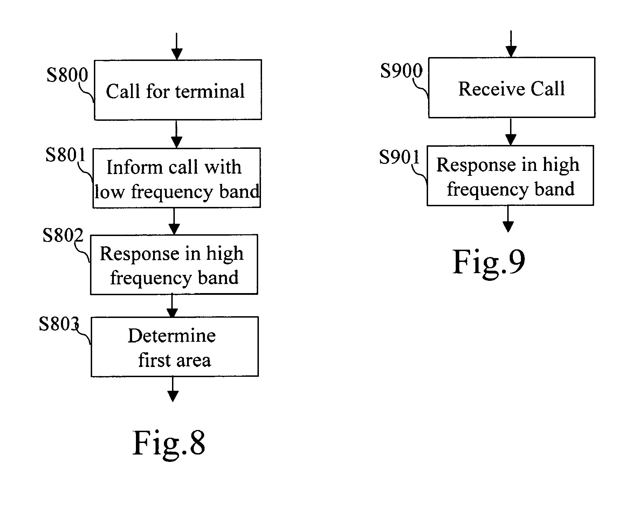

The base station 10 has, for example, an architecture based on components connected together by a bus 301 and a processor 300 controlled by programs as disclosed in the Fig. 7 or 8.

The bus 301 links the processor 300 to a read only memory ROM 302, a random access memory RAM 303, a low frequency band radio interface 305, a high frequency band radio interface 306 and a telecommunication network interface 307.

The low frequency band radio interface 305 and the low frequency band radio interface 306 are linked to an antenna array AntBS.

The memory 303 contains registers intended to receive variables, and the instructions of the programs related to the algorithms as disclosed in the Fig. 7 or 8.

The read only memory 302 contains instructions of the programs related to the algorithm as disclosed in the Figs. 7 or 8 which are transferred, when the base station 10 is powered on to the random access memory 303.

The low frequency band radio interface 305 comprises means for transferring through at least a first antenna of the antenna array AntBS information identifying a first area.

Preferably, the low frequency band radio interface 305 comprises means for transferring in different first areas, information identifying each first area.

As example and in a non limitative way, the signals radiated in a given first area are radiated by a given first antenna.

Such information identifying each first area are, as example and in a non limitative way, under the form of different pilot symbols.

It has to be noted here that, the low frequency band radio interface 305, prior to transfer the signals to the antenna array AntBS, frequency up converts, maps and so on the signals, as it is done in classical wireless telecommunication devices.

The low frequency band radio interface 305 comprises means for receiving from at least a terminal 20 information identifying a first area and/or a second area wherein the terminal is located.

In a variant of realisation the low frequency band radio interface 305 comprises means for receiving from at least a terminal 20 information identifying plural a first areas and/or plural second areas wherein the terminal is located.

Such information identifying the first and/or the second area are, as example and in a non limitative way, under the form of different pilot symbols.

The high frequency band radio interface 306 comprises means for directing the signals radiated in the second frequency band by plural second antennas of the antenna array AntBS into different second areas.

More precisely, the high frequency band radio interface 306 directs the signals radiated in the second frequency band into different second areas in a such way that the total area covered by the second areas is sensibly equal to the first area or areas.

As example and in a non limitative way, the high frequency band radio interface 306 directs the signals radiated in the second frequency band into different second areas using the technique known under the name of beamforming.

For each second area BFH11 to BFH15, BFH21 to BFH25, BFH31 to BFH35, BFH41 to BFH45, the base station 10 performs beamforming by N times duplicating the signals to be transferred and each duplicated signal is weighted, i.e. multiplied, by an element of a weighting vector of the base station 10.

Preferably and in a non limitative way, for each second area BFH11 to BFH15, BFH21 to BFH25, BFH31 to BFH35, BFH41 to BFH45, the high frequency band radio interface 306 comprises means for receiving the signals radiated in the second frequency band using the technique of beamforming. The high frequency band radio interface 306 performs beamforming by weighting, i.e. multiplying, each of the N signals received through the N antennas of the base station 10 by an element of a weighting vector of the base station 10 and combining the weighted signals.

The weighting vectors used by the base station 10 are determined for each second area and are different from each other.

The high frequency band radio interface 306 comprises also means for transferring through plural second antennas of the antenna array AntBS information identifying each second area.

The information identifying each second area are, as example and in a non limitative way, under the form of different pilot symbols.

It has to be noted here that, the high frequency band radio interface 306, prior to transfer the signals to the antenna array AntBS, frequency up converts, maps and so on the signals, as it is done in classical wireless telecommunication devices.

The high frequency band radio interface 306 comprises means for receiving from at least a terminal 20 information identifying a first area and/or a second area wherein the terminal is located.

In a variant of realisation the high frequency band radio interface 306 comprises means for receiving from at least a terminal 20 information identifying plural a first areas and/or plural second areas wherein the terminal is located.

The telecommunication network interface 307 enables the reception of a message from a telecommunication network representative of a request for an establishment of a communication with a terminal 20 located in a first or second areas covered by the base station 10. The telecommunication network is the wireless telecommunication network itself or a wired communication network like a telephone network or an Internet network or through a combination of above cited networks.

**Fig. 4** is a diagram representing the architecture of a terminal according to the present invention.

The terminal 20 has, for example, an architecture based on components connected together by a bus 401 and a processor 400 controlled by programs as disclosed in the Figs. 6a and 6b or 9.

The bus 401 links the processor 400 to a read only memory ROM 402, a random access memory RAM 403, a low frequency band radio interface 405 and a high frequency band radio interface 406.

The low frequency band radio interface 405 and the high frequency band radio interface 406 are linked to an antenna array AntMS.

The memory 403 contains registers intended to receive variables, and the instructions of the programs related to the algorithms as disclosed in the Figs. 6a and 6b or 9.

The read only memory 402 contains instructions of the programs related to the algorithms as disclosed in the Figs. 6a and 6b or 9 which are transferred, when the base station 10 is powered on to the random access memory 403.

The low frequency band radio interface 405 comprises means for receiving through at least an antenna of the antenna array AntMS information identifying at least a first area wherein the terminal 20 is located.

Such information identifying each area are, as example and in a non limitative way, under the form of different pilot symbols.

The low frequency band radio interface 405 comprises means for determining the quality of the signals received from the base station 10 in the first frequency band and for transferring the determined quality of signals parameter to the base station 10 through the antenna array AntMS.

The low frequency band radio interface 405 comprises means for transferring through at least an antenna of the antenna array AntMS information identifying at least a first and/or a at least a second area wherein the terminal 20 is located which are as example under the form of pilot signals.

It has to be noted here that, the low frequency band radio interface 405 may receive plural signals transferred in the first frequency band which identify different first areas. Such case occurs when the terminal 20 is located in the frontier of different first areas. In such case, the low frequency band radio interface 405 determines the quality parameter of each the signals comprising information identifying different first areas in the first frequency band and transfers each of the determined quality of signals parameter to the base station 10 through the antenna array AntMS.

In a variant, each of the determined quality of signals parameter are transferred to the processor 400 which decides which quality of signals parameter has to be transferred.

It has to be noted here that, the low frequency band radio interface 405, prior to transfer the signals to the antenna array AntBS, frequency up converts, maps and so on the signals, as it is done in classical wireless telecommunication devices.

Such information identifying the first and/or the second area are, as example and in a non limitative way, under the form of different pilot symbols.

The high frequency band radio interface 406 comprises means for receiving through at least an antenna of the antenna array AntMS information identifying at least a second area wherein the terminal 20 is located.

Such information identifying each area are, as example and in a non limitative way, under the form of different pilot symbols.

The high frequency band radio interface 406 comprises means for determining the quality of the signals received from the base station 10 in the second frequency band and for transferring the determined quality of signals parameter received from the base station 10 in the first and/or the second frequency band to the base station 10 through the antenna array AntMS.

Preferably and in a non limitative way, the high frequency band radio interface 406 comprises means for receiving the signals radiated in the second frequency band using the technique of beamforming. The high frequency band radio interface 406 performs beamforming by weighting, i.e. multiplying, each of the M signals received through the *M* antennas of the terminal 20 by an element of a weighting vector of the terminal 20 and combining the weighted signals.

Preferably and in a non limitative way, the high frequency band radio interface 406 comprises means for directing the signals radiated in the second frequency band using the technique of beamforming. The high frequency band radio interface 406 performs beamforming by *M* times duplicating the signals to be transferred and each duplicated signal is weighted, i.e. multiplied, by an element of a weighting vector of the terminal 20.

The high frequency band radio interface 406 comprises means for transferring through at least an antenna of the antenna array AntMS information identifying a first and/or a second area wherein the terminal 20 is located which are as example under the form of pilot signals.

It has to be noted here that, the high frequency band radio interface 406 may receive plural signals transferred in the second frequency band which comprise information identifying different second areas. Such case occurs when the terminal 20 is located in the frontier of different second areas. In such case, the high frequency band radio interface 406 determines the quality parameter of each the signals identifying different second areas received in the second frequency band and transfers each of the determined quality of signals parameter to the base station 10 through the antenna array AntMS.

In a variant, each of the determined quality of signals parameter are transferred to the processor 400 which decides which quality of signals parameter has to be transferred.

It has to be noted here that, the high frequency band radio interface 406, prior to transfer the signals to the antenna array AntBS, frequency up converts, maps and so on the signals, as it is done in classical wireless telecommunication devices.

Such information identifying the first and/or the second area are, as example and in a non limitative way, under the form of different pilot symbols.

The antenna array AntMS is composed of at least one antenna which is used for the transfer or the reception of signals in the first and the second frequency bands.

Preferably, the antenna array AntMS comprises plural antennas. The number of antennas used for the transmission and/or the reception of the signals in the second frequency band is larger than the number of antenna used for the reception of the signals in the first frequency band.

**Fig. 5** is an example of the antenna array of a base station.

The antenna array AntBS of the base station 10 comprises N antennas noted A1 to AN.

At least one first antenna of the antenna array AntBS is used for transferring and/or receiving signals in the first frequency band.

Preferably, plural first antennas of the antenna array AntBS are used for transferring and/or receiving signals in the first frequency band, each of the plural first antennas being dedicated to a given area BFL1, BFL2, BFL3 and BFL4.

Plural second antennas of the antenna array AntBS are used for transferring and/or receiving signals in the second frequency band. It has to be noted here that, the first antennas used for transferring and/or receiving signals in the first frequency band are used also for transferring and/or receiving signals in the second frequency band or are different from the first antennas used for transferring and/or receiving signals in the second frequency band.

The antenna array AntBS is arranged in such way that at least two first antennas are spaced by a distance which is larger than the distance spacing two second antennas.

Preferably and in a non limitative way, the first antennas are spaced by a distance which is at least equal to the half wavelength of the lowest frequency of the first frequency band and the second antennas are spaced by a distance which is at least equal to the half wavelength of the lowest frequency of the second frequency band.

As example, the antennas A1, A4, A9 and AN are used for transferring and/or receiving signals in the first frequency band, the antennas A1 to AN are used for transferring and/or receiving signals in the second frequency band.

It has to be noted here that in a variant of realisation, the antennas A1, A4, A9 and AN are not used for transferring and/or receiving signals in the second frequency band

It has to be noted here that, for the sake of simplicity, the antennas A 1 to AN are shown in the Fig. 5 in a one dimension antenna array AntBS. It has to be understood that the antennas A1 to AN are placed in the antenna array AntBS according to two or three dimensions.

**Figs. 6a and 6b** show parts of a first algorithm executed by a terminal according to the invention.

The algorithm disclosed in the Figs. 6a and 6b is executed by the processor 400 of each terminal 20 in parallel or sequentially in any order. The algorithm disclosed in the Figs. 6a and 6b is executed by the processor 400 when the terminal 20 is in idle mode or receives a communication from the wireless area network through the base station 10 or wants to establish a communication using the wireless area network and the base station 10.

At step S600 of the Fig. 6a, the processor 400 detects through the low frequency band radio interface 405, the reception of signals identifying the first area wherein the terminal 20 is located. Such signals are preferably pilot symbols.

At next step S601, the processor 400 commands the determination of a channel quality parameter of the received pilot signals. The channel quality parameter is as example an in a non limitative way determined by measuring the power strength of the received signal or by measure the signal to noise ratio.

In a variant of realisation, when the received signals comprise information identifying different first areas, the processor 400 commands the determination of a channel quality parameter for each signals comprising information identifying different first areas.

At next step S602, the processor 400 commands the transfer the information identifying the first area wherein the terminal 20 is located in combination or not with the determined channel quality parameter to the low frequency band radio interface 405 which transfers it to the base station 10 through the antenna array AntMS.

In a variant of realisation, when the received signals comprise information identifying different first areas, the processor 400 determines the best channel quality parameter and commands the transfer of the information identifying the first area which corresponds to the best channel quality parameter or the processor 400 commands the transfer of each determined channel quality parameter in combination with each information identifying the first area through the antenna array AntMS.

It has to be noted here that, in a variant of realization, the transfer is done through the low frequency band radio interface 405 which transfer it to the base station 10 through the antenna array AntMS.

It has to be noted here that, in a variant of realization, the processor 400 commands the transfer of the determined channel quality parameter or the determined channel quality parameters to the high frequency band radio interface 406 which transfers it to the base station 10 through the antenna array AntMS.

At step S610 of the Fig. 6b, the processor 400 detects through the high frequency band radio interface 406, the reception of signals identifying the second area wherein the terminal 20 is located. Such signals are preferably pilot symbols.

At next step S611, the processor 400 commands the determination of a channel quality parameter of the received pilot signals. The channel quality parameter is as example an in a non limitative way determined by measuring the power strength of the received signal or by measure the signal to noise ratio.

In a variant of realisation, when the received signals represent information identifying different second areas, the processor 400 commands the determination of a channel quality parameter for each signals representing information identifying different second areas.

At next step S612, the processor 400 commands the transfer the information identifying the second area wherein the terminal 20 is located in combination or not with the determined channel quality parameter to the high frequency band radio interface 406 which transfers it to the base station 10 through the antenna array AntMS.

In a variant of realisation, when the received signals comprise information identifying different second areas, the processor 400 determines the best channel quality parameter and commands the transfer of the information identifying the second area which corresponds to the best channel quality parameter or the processor 400 commands the transfer of each determined channel quality parameter in combination with each information identifying the second area through the antenna array AntMS.

It has to be noted here that, in a variant of realization, the transfer is done through the low frequency band radio interface 405 which transfer it to the base station 10 through the antenna array AntMS.

**Fig. 7** is a first algorithm executed by a base station according to the present invention.

The algorithm disclosed in the Fig. 7 is executed by the processor 300 of the base station 10.

At step S700, the processor 300 detects through the low frequency band radio interface 305 or the high frequency band radio interface 306, the reception of information identifying the first area wherein the terminal 20 is located. Preferably the received information comprise also a channel quality parameter determined by a terminal 20 on signals transferred in the first frequency band.

In a variant of realisation, the processor 300 detects through the low frequency band radio interface 305 or the high frequency band radio interface 306, the reception of information identifying plural first areas wherein the terminal 20 is located in combination with a channel quality parameter determined by a terminal 20 for each of the information identifying a first area. In that variant, the processor 300 determines the best channel quality parameter among the received channel quality parameter and identifies which information identifying the first area corresponds to the best channel quality parameter.

At step S701, the processor 300 detects through the low frequency band radio interface 305 or the high frequency band radio interface 306, the reception of information identifying the second area wherein the terminal 20 is located. Preferably the received information comprises also a channel quality parameter determined by the same terminal 20 on signals transferred in the second frequency band.

In a variant of realisation, the processor 300 detects through the low frequency band radio interface 305 or the high frequency band radio interface 306, the reception of information identifying plural second areas wherein the terminal 20 is located in combination with a channel quality parameter determined by a terminal 20 for each of the information identifying a second area. In that variant, the processor 300 determines the best channel quality parameter among the received channel quality parameter and identifies which information identifying the second area corresponds to the best channel quality parameter.

At next step S702, the processor 300 determines the second area in which the terminal 20 is located.

For that, using the information identifying the first area wherein the terminal 20 is located and the signals identifying the first area wherein the terminal 20 is located, the processor 300 is able to determine in which second area the terminal is among the second areas which have the same information identifying a second area.

According to the example of the Fig. 2, the terminal 20 is located in the first area, BFL2 and the second area BFH21.

Using the information identifying the second area BFL2, the processor 300 is able to determine among the second areas BFH11, BFH21, BFH31 and BFH41 which have the same information identifying the second area, that the terminal 20 is located in the second area BFH21.

At next step S703, the processor 300 transfers through the low frequency band radio interface 305 or the high frequency band radio interface 306 information identifying uniquely the determined second area to the terminal 20.

**Fig. 8** is a second algorithm executed by a base station according to the invention.

The algorithm disclosed in the Fig. 8 is executed by the processor 300 of the base station 10.

It has to be noted here that, the processor 300 executes the algorithm of the Fig. 8 simultaneously with the algorithm of the Fig. 7 or independently of the algorithm of the Fig. 8.

One can easily understand that the algorithm of the Fig. 8 can be executed without the algorithm of the Fig. 7.

At step S800, the processor 300 of the base station 10 detects the arrival from the wireless telecommunication network of a call for the terminal 20.

At next step S801, the processor 300 transfers to the low frequency band radio interface 305 a message indicating that a call is intended to be established with the terminal 20.

Such message is transferred under the form of signals in the first frequency band by the low frequency band radio interface 305 through at least a first antenna of the antenna array AntBS.

At next step S802, the processor 300 detects the reception through the high frequency band radio interface 306, the reception of signals in response to the transferred message.

At next step S803, the processor 300 determines the second area in which the terminal 20 is located. For that, the processor 300 identifies the second area in which the terminal 20 is located by measuring the channel responses of plural second antennas of the antenna array AntBS or the processor 300 identifies the second area in which the terminal 20 is located by reading the information identifying the second area comprised in the received signals.

**Fig. 9** is a second algorithm executed by a terminal according to the present invention.

The algorithm disclosed in the Fig. 4 is executed by the processor 400 of the terminal 20.

It has to be noted here that, the processor 400 executes the algorithm of the Fig. 9 simultaneously with the algorithm of the Figs. 6a and 6b or independently of the algorithm of the Figs. 6a and 6b.

One can understand that the algorithm of the Fig. 9 can be executed without the algorithm of the Figs. 6a and 6b.

At step S900, the processor 400 detects the reception through the low frequency band radio interface 405 a message indicating that a call is intended to be established with the terminal 20.

At next step S901, the processor 400 transfers to the high frequency band radio interface 406 a response message indicating that the message has been received.

Naturally, many modifications can be made to the embodiments of the invention described above without departing from the scope of the present invention.

## Claims

1. Base station of a wireless telecommunication network, the base station comprising at least a first antenna which radiates signals in a first frequency band into a first area, **characterised in that** the base station comprises plural second antennas which radiate signals in a second frequency band higher than the first frequency band and means for directing the signals radiated in the second frequency band by the plural second antennas into different second areas and **in that** the total area covered by the second areas is sensibly equal to the first area.

2. Base station according to claim 1, **characterised in that** the base station comprises at least two first antennas, each of the at least two first antennas being one of the second antennas and **in that** the first antennas are spaced by a distance which is larger than the distance spacing two second antennas.

3. Base station according to claim 2, **characterised in that** each first antenna radiates signals in the first frequency band into different first areas and **in that** the base station comprises means for transferring, through at least a part of the signals radiated in the first frequency band in each first area, information identifying the first area from the other first areas.

4. Base station according to claim 3, **characterised in that** the base station comprises means for transferring, through at least a part of the signals radiated in the second frequency band, in each second area information identifying the second area from the other second areas which are comprised in the same first area as the second area.

5. Base station according to claim 4, **characterised in that** the base station comprises :
- means for receiving, from a terminal of the wireless telecommunication network, through the antennas, signals comprising information identifying a first area wherein the terminal is located,
- means for receiving, from the terminal, through the antennas, signals comprising information representative of the second area wherein the terminal is located,
- means for determining in which second area the terminal is according to the received information.

6. Method according to claim 5, **characterised in that** the base station comprises means for receiving signals representative of the quality of the signals received by the terminal in the first and second frequency bands.

7. Base station according to claim 1, **characterised in that** the base station comprises :
- means for detecting a request, issued from a telecommunication network, for a communication with a terminal,
- means for transferring a message through the first frequency band,
- means for receiving signals in the second frequency band in response to the transferred message,
- means for determining the second area in which the terminal is located according to the received signals in the second frequency band.

8. Method for managing at least an area covered by a base station of a wireless telecommunication network, the base station comprising at least a first antenna which radiates signals in a first frequency band into a first area, **characterised in that** the method comprises the step, executed by the base station of, directing the signals radiated by plural second antennas of the base station in a second frequency into different second areas, the second frequency band being higher than the first frequency band, wherein the total area covered by the second areas is sensibly equal to the first area.

9. Method according to claim 8, **characterised in that** the base station has at least two first antenna which radiates signal in the first frequency band into different first areas and the method comprises further step of transferring, through at least a part of the signals radiated in the first frequency band in each first area, information identifying the first area from the other first areas.

10. Method according to claim 9, **characterised in that** the method comprises further step of transferring, through at least a part of the signals radiated in the second frequency band, in each second area, information identifying the second area from the other second areas which are comprised in the same first area as the second area.

11. Method according to claim 10, **characterised in that** the method comprises further step of :
- receiving, from a terminal of the wireless telecommunication network, through the antennas, signals comprising information identifying a first area wherein the terminal is located,
- receiving, from the terminal, through the antennas, signals comprising information representative of the second area wherein the terminal is located,
- determining in which second area the terminal is according to the received information.

12. Method according to claim 11, **characterised in that** the base station comprises means for receiving signals representative of the quality of the signals received by the terminal in the first and second frequency bands.

13. Method according to claim 8, **characterised in that** the method comprises further steps of :
- detecting a request, issued from the wireless area network, for a communication with a terminal,
- transferring a message through the first frequency band,
- receiving signals in the second frequency band in response to the transferred message,
- determining the second area in which the terminal is located according to the received signals in the second frequency band.

14. Terminal of a wireless telecommunication network, the terminal comprising means for receiving signals from a base station wireless telecommunication network in a first frequency band, the signals comprising information identifying a first area in which the signals are radiated by the base station in the first frequency band, means for determining the quality of the received signals, and means for transferring signals to the base station signals comprising information identifying a first area wherein the terminal is located, **characterised in that** the terminal further comprises :
- means for receiving signals from a base station wireless telecommunication network in a second frequency band, the signals comprising information identifying a second area in which the signals are radiated by the base station in the second frequency band,
- means for determining the quality of the received signals,
- means for transferring signals to the base station signals comprising information identifying a first area wherein the terminal is located, and the quality of the signals received by the terminal.

15. Terminal according to claim 14, **characterised in that** the terminal comprises means for transferring signals representative of the quality of the signals received by the terminal in the first and second frequency bands.

16. Terminal according to claim 14 or 15, **characterised in that** it comprises means for receiving a message through the first frequency band, the message being representative of a communication which is intended to be established with the terminal and means for transferring signals in the second frequency band in response to the received message.

17. Terminal according to any of the claims 14 to 15 **characterised in that** the terminal comprises a number of antennas used for the reception and/or the transfer of the signals in the second frequency band which is larger than the number of antennas used for the reception and/or the transfer of the signals in the first frequency band.

18. Method for reporting information by a terminal of a wireless telecommunication network, the method comprises the steps, executed by the terminal, of :
- receiving signals from a base station wireless telecommunication network in a first frequency band, the signals comprising information identifying a first area in which the signals are radiated by the base station in the first frequency band,
- determining the quality of the received signals,
- transferring to the base station signals comprising information identifying a first area wherein the terminal is located,
**characterised in that** the method further comprises the steps of :
- receiving signals from a base station wireless telecommunication network in a second frequency band, the signals comprising information identifying a second area in which the signals are radiated by the base station in the second frequency band,
- determining the quality of the received signals,
- transferring to the base station signals comprising information identifying a first area wherein the terminal is located.

19. Method according to claim 18, **characterised in that** the terminal :
- receives a message through the first frequency band, the message being representative of a communication which is intended to be established with the terminal
- transferring signals in the second frequency band in response to the received message.

20. Computer program which can be directly loadable into a programmable device, comprising instructions or portions of code for implementing the steps of the method according to claims 8 to 13, when said computer program is executed on a programmable device.

21. Computer program which can be directly loadable into a programmable device, comprising instructions or portions of code for implementing the steps of the method according to claim 18 or 19, when said computer program is executed on a programmable device.
